**Europäisches Patentamt**

**European Patent Office**

**Office européen des brevets**

(19)

(11) Veröffentlichungsnummer: **0 075 820**
**B1**

(12)                    **EUROPÄISCHE PATENTSCHRIFT**

(45) Veröffentlichungstag der Patentschrift:
13.08.86

(21) Anmeldenummer: **82108648.5**

(22) Anmeldetag: **18.09.82**

(51) Int. Cl.⁴: **C 08 F 220/04,** C 08 F 222/02 //
(C08F220/04, 222:02),
(C08F222/02, 220:04)

(54) Verfahren zur Herstellung von Copolymerisaten aus monoethylenisch ungesättigten Mono- und Dicarbonsäuren.

(30) Priorität: **28.09.81 DE 3138574**
**01.12.81 DE 3147489**

(43) Veröffentlichungstag der Anmeldung:
**06.04.83 Patentblatt 83/14**

(45) Bekanntmachung des Hinweises auf die Patenterteilung:
**13.08.86 Patentblatt 86/33**

(84) Benannte Vertragsstaaten:
**AT BE CH DE FR GB IT LI NL SE**

(56) Entgegenhaltungen:
**GB-A-1 026 145**
**US-A-3 635 915**

(73) Patentinhaber: **BASF Aktiengesellschaft, Carl-Bosch- Strasse 38, D-6700 Ludwigshafen (DE)**

(72) Erfinder: **Denzinger, Walter, Wormser Landstrasse 65, D-6720 Speyer (DE)**
Erfinder: **Hartmann, Heinrich, Dr., Weinheimer Strasse 46, D-6703 Limburgerhof (DE)**
Erfinder: **Trieselt, Wolfgang, Dr., Alwin- Mittasch-Platz 1, D-6700 Ludwigshafen (DE)**
Erfinder: **Hettche, Albert, Dr., Kleistrasse 12, D-6717 Hessheim (DE)**
Erfinder: **Schneider, Rolf, Dr., Feldbergstrasse 21, D-6800 Mannheim 1 (DE)**
Erfinder: **Raubenheimer, Hans- Juergen, Benzstrasse 6, D-6834 Ketsch (DE)**

EP 0 075 820 B1

## Beschreibung

Die Erfindung betrifft ein neues Verfahren zur Herstellung von Copolymerisaten monoethylenisch ungesättigter Mono- und Dicarbonsäuren durch radikalische Copolymerisation der Monomeren in wäßrigem Medium.

Aus der DE—A—29 36 984 sind Copolymerisate der Maleinsäure und Acrylsäure bekannt, die als Inkrustierungsinhibitoren in Wasch- und Reinigungsmitteln Verwendung finden—eine spezielle Herstellungsmethode für diese Polymerisate wird dort jedoch nicht angegeben.

In der DE—A—22 12 623 ist ein Verfahren beschrieben (siehe Beispiel 3 der Publikation), bei dem man die Copolymerisation von Maleinsäureanhydrid und Acrylsäure in Gegenwart von Benzoylperoxid in Benzol als Lösungsmittel durchgeführt—es handelt sich um eine Fällungspolymerisation, bei der das gebildete Polymerisat wegen seiner Unlöslichkeit in Benzol bei einer Bildung ausfällt. Nachteilig bei dieser Methode ist der notwendige Einsatz von Benzol, das anschließend wieder abgetrennt werden muß. Außerdem entstehen Polymerisate mit zu hohem Molgewicht, was aber deren Eingenschaften als Inkrustierungsinhibitoren abträglich ist.

Aus der US—A—3 268 591 ist ein Verfahren zur Herstellung von Maleinsäureanhydrid/Vinylacetat-Copolymeren bekannt, bei dem in Wasser und in Gegenwart von Redoxkatalysatoren polymerisiert wird.

In dieser Literaturstelle wird ausdrücklich darauf hingewiesen, daß die Methode nur bei genauer Einhaltung des pH-Bereichs zwischen 3 und 5 erfolgversprechend ist. Eine Verbesserung der letztgenannten Methode soll gemäß der US—A—3 887 480 darin bestehen, daß man statt der Redoxkatalysatoren bei der Copolymerisation von Maleinsäure (anhydrid) und Acrylsäure in wäßrigem Medium einen radikalbildenden Initiator, wie Kaliumperoxidisulfat, in Mengen von—bezogen auf die Summe der Monomerenmindestens 17 Gew.-% einsetzt. Dieser sehr hohe Anteil an Initiator hat—abgesehen von dem hohen Verbrauch an irreversibel vernichteten Chemikalien—den Nachteil, daß die erhaltenen Copolymerisate wegen des hohen Angebots an Peroxogruppen chemisch zu sehr verändert werden (Einbau von Carboxylfunktion u.ä.).

In der GB—A—1 026 145 wird eine Massepolymerisation von Maleinsäure, Maleinsäureanhydrid oder eines Halbesters der Maleinsäure mit einer Vinyl- oder Vinylidenverbindung in Gegenwart von Peroxiden und einem Molekulargewichtsregler, der bevorzugt eine cyclische Terpenverbindung dargestellt, beschrieben. Eine Copolymerisation mit Acrylsäure geht nicht hervor und, da es sich um eine lösungsmittelfreie Massepolymerisation handelt, auch nicht eine Teilneutralisation.

Das Ziel der Erfindung bestand darin, ein Verfahren zur Herstellung von Copolymerisaten monoethylenisch ungesättigter Mono- und Dicarbonsäureen in wäßrigem Medium zu entwickeln, das in möglichst nicht aufwendiger Weise zu Produkten führt, welche in optimaler Weise die Verwendung gestatten, wie sie in der DE—A—29 36 984, auf die hier ausdrücklich Bezug genommen wird, dargestellt wird, nämlich als Inkrustierungsinhibitoren.

Speziell sollte dieses Verfahren noch dahingehend optimiert werden, daß der Restgehalt an monomerer Dicarbonsäure möglichst unter 1,5 Gew.-% liegt. Bezüglich der Monocarbonsäuren stellt sich dieses Problem nicht, da diese zu nahezu 100% durchpolymerisieren (Acryl- oder Methacrylsäure).

Dieses Ziel wurde mit einem Verfahren erreicht, wie es in den Patentansprüchen definiert ist.

Ausgangscomonomere a) des erfindungsgemäßen Verfahrens sind Maleinsäure, Itaconsäure, Mesaconsäure, Fumarsäure, Methylenmalonsäure oder Citraconsäure, ihre Salze oder, falls es die räumliche Stellung der Carboxylgruppen zuläßt (cis-Position), deren Anhydride, welch letztere dann bevorzugt eingesetzt werden.

Bevorzugt gelangt Maleinsäure oder Maleinsäureanhydrid zum Einsatz.

Ausgangsmonomere b) sind monoethylenisch ungesättigte Monocarbonsäuren oder ihre Salze. Sie haben 3 bis 10 C-Atome im Molekül, und es seien hier vor allem Acrylsäure oder Methacrylsäure genannt, jedoch kann man aber auch Vinylessigsäure oder $C_2$- bis $C_4$-Alkylhalbester der obengenannten Dicarbonsäuren, von allem der Maleinsäure, einsetzen. Auch Mischungen aus den Druppen a und b können zugesetzt werden.

Unter "Salzen" der unter a) und b) genannten Carbonsäuren sind im erfindungsgemäßen Sinne Alkalimetallsalze, vorzugsweise Natrium- oder Kaliumsalze, Ammoniumsalze oder organische Aminsalze, wie die der Tri-$C_1$- bis $C_4$-Alkylamine, der Mono-, Di- oder Tri-$C_1$- bis $C_4$-alkanolamine oder deren Mischungen zu verstehen. Im folgenden soll der Einfachheit halber nach wie vor von "Salzen" die Rede sein.

Unter den bevorzugt einzusetzenden Alkalimetallsalzen wählt man zweckmäßigerweise die am leichtesten erhältlichen, nämlich die Natrium- oder Kaliumsalze, vorzugsweise die Natriumsalze.

Ausgangsmonomere c), die nicht unbedingt mit einpolymerisiert werden müssen, sind carboxylgruppenfreie mit den Monomeren a) und b) copolymerisierbare, vorzugsweise wasserlösliche Monomere. Hier seien z.B. Acrylamid, Methacrylamid, Acrylamidosulfonsäure, Vinylsulfonsäure, Allylsulfonsäure, Vinylphosphonsäure, Allylphosphonsäure, Vinylacetat, Hydroxyethyl- oder -propylacrylat, Vinylglycol oder (Meth)acrylsäuremethylester genannt. Die genannten Sulfon- und Phosphonsäuren können ebenfalls unter Berücksichtigung des definitionsgemäßen Neutralisationsgrades—in Form ihrer Alkalimetall- und/oder Ammonium- und/oder Aminsalze zum Einsatz gelangen.

Die Monomeren a) sind im Ansatz zu 60 bis 10, vorzugsweise 45 bis 20 Gew.-% die Monomeren b) zu 40 bis 90, vorzugsweise 55 bis 80 Gew.-%

anwesend. Die Monomeren c) können zu bis zu 20 Gew.-% eingesetzt werden.

Wasserlösliche radikalbildende Initiatoren sind z.B. Wasserstoffperoxid selbst. Peroxidisulfate, vor allem Na- oder Ammoniumperoxidisulfat, oder Azo- bis -(2-aminopropan)-hydrochlorid. Vorzugsweise verwendet man Wasserstoffperoxid.

Die Initiatoren sind erfindungsgemäß zu 0,5 bis 5 Gew.%—bezogen auf die Summe der Monomeren—im Ansatz zugegen. Die Polymerisation findet in wäßrigem Medium statt. Hierbei sollte die Konzentration zweckmäßigerweise so gewählt werden, daß die wäßrige Lösung 20 bis 70 Gew.-%, vorzugsweise 40 bis 60.-% Gesamtmonomeren enthält.

Außerdem können die bei radikalischen Polymerisationen in wäßrigem Medium üblichen Regler, wie Thioglycolsäure oder $C_1$—$C_4$-Aldehyde, oder Kettenverlängerer wie Methylenbisacrylamid oder Divinylglycol zum Einsatz gelangen und zwar—bezogen auf die Summe der Monomeren—zu 0,1 bis 2 bzw. 0,5 bis 5 Gew.-%.

Bei der Polymerisation geht man in der Weise vor, daß man zunächst eine wäßrige Lösung der Dicarbonsäure, ihres Salzes und/oder Anhydrids vorlegt und anschließend innerhalb 3 bis 10 Stunden, vorzugsweise 5 bis 8 Stunden die Monocarbonsäure bzw. ihr Alkalimetallsalz und den Initiator, zweckmäßigerweise ebenfalls in wäßriger Lösung, zufügt. Manchmal ist es von Vorteil, einen geringen Teil der Komponente b) zusammen mit einem geringen Anteil an Initiator sofort der vorgelegten Komponente a) zuzusetzen. Die Reaktionstemperatur kann in weiten Grenzen schwanken, zweckmäßigerweise wählt man Temperaturen zwischen 60 und 150°C, vorzugsweise 100 bis 130°C. Als Reaktionsgefäß wählt man, falls oberhalb der Siedetemperatur des Wassers gearbeitet wird, Druckgefäße, wie Autoclaven.

Nach beendeter Polymerisation stellt man je nach Verwendungszweck schwächer oder stärker alkalisch, sofern dieser pH-Bereich nicht schon während der Polymerisation gewählt war, wobei die Anhydridgruppen—sofern von Anhydriden ausgegangen wurde oder sich Anhydride im Ansatz bestanden,—verseift werden.

Die erhaltene wäßrige Polymerisatlösung kann sofort verwendet werden. Die Polymerisate können aber auch durch Eindampfen der Lösung in getrockneter Form isoliert und z.B. in pulverförmige Waschmittel eingearbeitet werden. Schließlich kann auch die wäßrige Lösung direkt mit andere Waschmittelbestandteile enthaltenden wäßrigen Lösungen vereinigt und den üblichen Sprühprozessen unterworfen werden.

Beim Einsatz der Monomeren a) und b) ist darauf zu achten, daß sie zusammen—d.h. die Summe von a) und b)—zu 20 bis 80%, vorzugsweise 30 bis 70%, neutralisiert sind. Bies kann dadurch erfolgen, daß man die Dicarbonsäuren oder einen Teil davon in Form ihrer Salze, und die Monocarbonsäuren in freier Form einsetzt. Man kann aber auch umgekehrt verfahren und die Dicarbonsäuren in freier Form oder als—soweit möglich—Anhydride und die Monocarbonsäuren in Form ihrer Salze verwenden. In jedem Fall wird man dafür Sorge tragen, daß das Verhältnis freier Säuren zu den Salzen einem Gesamtneutralisationsgrad der obengenannten Definition entspricht.

Die Copolymerisate weisen K-Werte zwischen 8 und 100, meistens aber zwischen 10 und 60 auf. Sie entsprechen sämtlichen Erfordernissen, wie sie für gute Inkrustierungsinhibitoren, z.B. gemäß den in der DE—OS 29 36 984 genannten, gelten. Die Copolymerisate weisen Gehalte an nicht umgesetzten Dicarbonsäuren von weniger als 1,5% auf, was an sich schon deshalb überraschen muß, weil besonders wenn man von Alkalimetallsalzen der Dicarbonsäuren, wie Maleinsäure, ausgeht—man eher das Gegenteil erwarten konnte, nämlich eine verschleichterte Polymerisation. Bekanntlich polymerisiert Maleinsäureanhydrid besser als die freie Maleinsäure oder ihr Alkalimetallsalz.

Die nun folgenden Beispiele erläutern die Erfindung. Die K-Werte wurden von den vollneutralisierten Salzen nach H. Fikentscher, Cellulosechemie 13, S. 60, in 2%iger wäßriger Lösung bei 25°C bestimmt. Die monomere Maleinsäure wurde auf polarographischem Wege bestimmt (siehe "Polarographische Arbeitsmethoden" von M. Mark von Stachelberg, erschienen 1950 im Verlag de Gruyter Co, Berlin W 35).

Allgemeine Herstellungsvorschrift

In einem mit Rührer versehenen Edelstahlreaktor wird die gewünschte Menge an Dicarbonsäureanhydrid, Dicarbonsäure oder ganz oder teilweise neutralisierte Dicarbonsäure (mit NaOH neutralisiert) in der 1,5fachen Menge an vollentsalztem Wasser vorgelegt. Der Reaktor wird 3 mal mit Stickstoff (5 bar) abgepreßt und anschließend auf die gewünschte Reaktionstemperatur erhitzt. Dann werden innerhalb 5 Stunden eine Mischung aus der gewünschten Menge an Monocarbonsäure oder deren Natriumsalz—je nach gewünschtem Gesamtneutralisierungsgrad—und der 1,5fachen Menge vollentsalzten Wassers und innerhalb 6 Stunden ein Gemisch aus der gewünschten Menge an Initiator (als 30%ige wäßrige Lösung) und der 1,5fachen Menge an vollentsalztem Wasser gleichmäßig zudosiert. Anschließend wird noch 2 Stunden bei der gewählten Reaktionstemperatur nacherhitzt. Es entsteht eine ca. 40 gew.-%ige Lösung. Die K-Werte und Gehalte an Restdicarbonsäure, sowie die speziellen Reaktionsbedingungen sind aus der nun folgenden Tabelle ersichtlich.

TABELLE

| Beispiel Nr. | Zusammensetzung [Gew.-%] | Dicarbonsäure-Vorlage Neutralisations-grad [%] | Monocarbonsäure-Zulauf (incl. sonstige Mono-merer) Neutralisa-tionsgrad [%] | Gesamter Neutralisations-grad [%] |
|---|---|---|---|---|
| 1 | 70 AS/30 MS | 100 | 0 | 35 |
| 2 | 70 AS/30 MS | 90 | 29,7 | 50 |
| 3 | 70 AS/30 MS | 90 | 90 | 90 |
| 4 | 70 AS/30 MS | 100 | 100 | 100 |
| 5 | 70 AS/30 MS | 0 | 0 | 0 |
| 6 | 70 AS/30 MS | 90 | 0 | 32 |
| 7 | 70 AS/30 MS | 100 | 0 | 35 |
| 8 | 70 AS/30 MS | 40 | 40 | 40 |
| 9 | 70 AS/30 MS | 90 | 50 | 65 |
| 10 | 70 AS/30 MS | 90 | 90 | 90 |
| 11 | 70 AS/30 MS | 80 | 20 | 41 |
| 12 | 60 AS/40 MS | 90 | 0 | 41 |
| 13 | 50 AS/50 MS | 90 | 0 | 45 |
| 14 | 70 AS/30 MS | 90 | 0 | 31 |
| 15 | 80 AS/20 CS | 100 | 0 | 22 |
| 16 | 50 AS/50 IA | 90 | 0 | 48 |
| 17 | 60 AS/30 MS/10 MM | 90 | 0 | 33 |
| 18 | 60 AS/30 MS/10 VS | 90 | 0 | 40 |
| 19 | 60 AS/30 MS/10 AA | 90 | 0 | 35 |
| -20 | 60 AS/30 MS/10 HPA | 90 | 0 | 35 |

TABELLE (Forts.)

| Beispiel Nr. | Fahrweise Temp. [°C] | Initiator-Menge [%] fest berechnet auf fest | Initiator | Rest-Dicarbonsäure-Gehalt [%] bez. auf Feststoff | K-Wert |
|---|---|---|---|---|---|
| 1 | 100 | 2,0 | $H_2O_2$ | 0,5 | 69,0 |
| 2 | 100 | 2,0 | $H_2O_2$ | 0,3 | 68,4 |
| 3 | 100 | 2,0 | $H_2O_2$ | 5,4 | 42,7 |
| 4 | 100 | 2,0 | $H_2O_2$ | 13,0 | 28,0 |
| 5 | 120 | 2,0 | $H_2O_2$ | 2,0 | 39,1 |
| 6 | 120 | 2,0 | $H_2O_2$ | 0,05 | 40,9 |
| 7 | 120 | 2,0 | $H_2O_2$ | 0,2 | 20,6 |
| 8 | 120 | 2,0 | $H_2O_2$ | 0,3 | 40,2 |
| 9 | 120 | 3,2 | $H_2O_2$ | 0,12 | 24,5 |
| 10 | 120 | 3,6 | $H_2O_2$ | 1,6 | 19,8 |
| 11 | 130 | 4,0 | $H_2O_2$ | 0,04 | 37,1 |
| 12 | 120 | 2,0 | $H_2O_2$ | 0,20 | 32,2 |
| 13 | 120 | 2,0 | $H_2O_2$ | 0,53 | 24,2 |
| 14 | 100 | 4,0 | $Na_2S_2O_8$ | 0,03 | 79,7 |
| 15 | 120 | 2,0 | $H_2O_2$ | 0,14 | 28,3 |
| 16 | 100 | 4,0 | $H_2O_2$ | 0,28* | 48,9 |
| 17 | 120 | 2,0 | $H_2O_2$ | 0,90 | 27,0 |
| 18 | 120 | 2,0 | $H_2O_2$ | 0,09 | 25,6 |
| 19 | 120 | 2,0 | $H_2O_2$ | 0,07 | 36,9 |
| 20 | 120 | 2,0 | $H_2O_2$ | 0,09 | 25,6 |

*erhalten mittels Hydrieriodzahl (Polarographie versagt in diesem Falle)

Zeichenerklärung:
AS=Acrylsäure
MS=Maleinsäure
CS=Citraconsäure
MM=Maleinsäuremonomethylester
VS=Vinylsulfonsäure (Na-Salz)
AA=Acrylamid
HPA=Hydroxypropylacrylat
IS=Itaconsäure
Die Beispiele 3 bis 5 und 10 dienen dem Vergleich und weisen wesentlich höhere Rest-Dicarbonsäure-Gehalte auf.

## Patentansprüche

1. Verfahren zur Herstellung von Copolymerisaten, die monoethylenisch ungesättige Mono- und Dicarbonsäuren als Monomereinheiten einpolymerisiert enthalten, durch Copolymerisation der Monocarbonsäuren mit den Dicarbonsäuren oder ggf. deren inneren Anhydriden in wäßrigem Medium in Gegenwart von wasserlöslichen Initiatoren, dadurch gekennzeichnet, daß man

a) 10 bis 60 Gew.%—bezogen auf die Summe der Monomeren—Maleinsäure, Itaconsäure, Mesaconsäure, Fumarsäure, Methylenmalonsäure oder Citraconsäure, ihres Alkalimetallsalzes oder ggf. ihres Anhydrids,

b) 90 bis 40 Gew.% einer monoethylenisch ungesättigten Monocarbonsäure mit 3 bis 10 C-Atomen oder ihres Alkalimetallsalzes und

c) 0 bis 20 Gew.% eines sonstigen carboxylgruppenfreien monoethylenisch ungesättigten mit a) und b) copolymerisierbaren Monomeren in Gegenwart von 0,5 bis 5 Gew.- des wasserlöslichen Initiators—bezogen auf die Monomeren—in wäßrigem Medium mit einem Gesamtmonomerengehalt von 20 bis 70 Gew.% in der Weise copolymerisiert, daß man die Dicarbonsäure, ihr Salz bzw. ihr Anhydrid im wäßrigen Medium vorlegt und die Monocarbonsäure mit dem Initiator innerhalb 3 bis 10 Std. zufügt und bei 60 bis 150°C abreagieren läßt, wobei man die Monomeren a) und b) in einer Form einsetzt, in der sie während der Polymerisationsreaktion zu 20 bis 80% neutralisiert sind und ggf. die Anhydridgruppen verseift.

2. Verfahren nach Anspruch 1, dadurch gekennzeichnet, daß man als Monomeres

a) Maleinsäure oder Maleinsäureanhydrid und als Monomeres

b) Acrylsäure oder Methacrylsäure einsetzt.

## Revendications

1. Procédé de préparation de copolymérisats, qui contiennent en polymérisation, comme motifs monomères, des acides mono- et dicarboxyliques à insaturation monoéthylénique, par copolymérisation des acides monocarboxyliques avec les acides dicarboxyliques ou éventuellement leurs anhydrides internes, en milieu aqueux, en présence d'initiateurs solubles dans l'eau, caractérisé par le fait que l'on copolymérisé

a) 10 à 60% en poids— par rapport à la somme des monomères—d'acide maléique, itaconique, mésaconique, fumarique, méthylène-malonique ou citraconique, leur sel de métal alcalin ou éventuellement leur anhydride,

b) 90 à 40% en poids d'un acide monocarboxylique, insaturé monoéthyléniquement, ayant 3 à 10 atomes C, ou son sel de métal alcalin et

c) 0 à 20% en poids d'un autre monomère, dépourvu de groupes carboxyle, insaturé monoéthyléniquement, et copolymérisable avec a) et b),

en présence de 0,5 à 5% poids de l'initiateur soluble dans l'eau—par rapport aux monomères—en milieu aqueux, avec une teneur totale en monomères de 20 à 70% en poids, et ce, en introduisant les acides dicarboxyliques, leurs sels ou leurs anhydrides, en milieu aqueux, en ajoutant les acides monocarboxyliques avec l'initiateur en l'espace de 3 à 10 heures et en laissant réagir entre 60 et 150°C, les monomères a) et b) étant introduits sous une forme dans laquelle ils sont neutralisés jusqu'à 20 à 80% pendant la polymérisation et les groupes anhydride sont éventuellement saponifiés.

2. Procédé selon la revendication 1, caractérisé par le fait que l'on introduit comme monomère

a) de l'acide maléique ou de l'anhydride maléique et, comme monomère

b) de l'acide acrylique ou méthacrylique.

## Claims

1. A process for the preparation of copolymers which contain monoethylenically unsaturated monocarboxylic acids and dicarboxylic acids as copolymerized units, by copolymerizing the monocarboxylic acids with the dicarboxylic acids or, if desired, their inner anhydrides, in an aqueous medium in the presence of a water-soluble initiator, wherein

(a) from 10 to 60% by weight, based on the sum of the monomers, of maleic acid, itaconic acid, mesaconic acid, fumaric acid, methylenemalonic acid or citraconic acid, an alkali metal salt thereof or, if desired, an anhydride thereof,

(b) from 90 to 40% by weight of a monoethylenically unsaturated monocarboxylic acid of 3 to 10 carbon atoms or an alkali metal salt thereof, and

c) from 0 to 20% by weight of another monoethylenically unsaturated monomer which is free from carboxyl groups and is copolymerizable with (a) and (b),

are copolymerized in an aqueous medium having a total monomer content of from 20 to 70% by weight, in the presence of from 0.5 to 5% by weight, based on monomers, of the water-soluble initiator, by introducing the dicarboxylic acid, its salt or its anhydride into the aqueous medium, adding the monocarboxylic acid together with the initiator in the course of from 3 to 10 hours, completing the reaction at 60 to 150°C, monomers (a) and (b) being used in a form in which they are 20—80% neutralized during the reaction, and, where appropriate, hydrolyzing the anhydride groups.

2. A process as claimed in claim 1, wherein maleic acid or maleic anhydride is used as monomer (a), and

acrylic acid or methacrylic acid is used as monomer (b).